# EUROPEAN PATENT APPLICATION

(11) **EP 4 557 435 A1**
(43) Date of publication of application: **21.05.2025**
(21) Application number: 23920739.2
(22) Date of filing: 08.10.2023
(51) Int. Cl.: H01M 10/0567, H01M 10/054

(54) **SODIUM METAL BATTERY CELL AND PREPARATION METHOD THEREFOR, BATTERY AND ELECTRIC DEVICE**

(30) Priority: 09.02.2023 CN 202310102055
(71) Applicant: Contemporary Amperex Technology (Hong Kong) Limited, Hong Kong (HK)
(72) Inventor: XU, Yida, Ningde, Fujian 352100 (CN); ZHANG, Xinxin, Ningde, Fujian 352100 (CN); GUO, Bingkun, Ningde, Fujian 352100 (CN); LI, Xiaolong, Ningde, Fujian 352100 (CN); CHEN, Shigang, Ningde, Fujian 352100 (CN); YAO, Shikang, Ningde, Fujian 352100 (CN); LIU, Ben, Ningde, Fujian 352100 (CN)
(74) Representative: Kraus & Lederer PartGmbB
(86) International application number: PCT/CN2023/123359
(87) International publication number: WO 2024/164547

(57) **Abstract**

This application relates to the field of battery technology, and discloses a sodium metal battery cell and a preparation method thereof, a battery, and an electrical device. The sodium metal battery cell includes: an electrolyte solution, where the electrolyte solution includes a first additive, and the first additive includes an organic compound containing an unsaturated group; and a catalyst, where the catalyst includes at least one of a transition-metal pure element or an alloy thereof, thereby improving performance of the sodium metal battery cell.

## Description

### CROSS-REFERENCE TO RELATED APPLICATIONS

This application claims priority to Patent Application No. 202310102055.2, filed on February 9, 2023 and entitled "SODIUM METAL BATTERY CELL AND PREPARATION METHOD THEREOF, BATTERY, AND ELECTRICAL DEVICE", which is incorporated herein by reference in its entirety.

### TECHNICAL FIELD

This application relates to the field of battery technology, and in particular, to a sodium metal battery cell and a preparation method thereof, a battery, and an electrical device.

### BACKGROUND

With the aggravation of environmental pollution, the new energy industry is attracting more and more attention. Battery technology is crucial to the development of the new energy industry.

Due to the abundant reserves and low price of sodium salt raw materials, the application of sodium metal battery cells is gradually grabbing attention. During the use or storage of a sodium metal battery cell, gases such as hydrogen are generated, thereby producing an adverse effect on the performance of the sodium metal battery cell. Therefore, how to provide a sodium metal battery cell to improve the performance of sodium metal battery cell is a pressing technical challenge.

### SUMMARY

This application is developed in view of the above challenge, and an objective of this application is to provide a sodium metal battery cell to improve performance of the sodium metal battery cell.

To achieve the above objective, this application provides a sodium metal battery cell and a preparation method thereof, a battery, and an electrical device.

According to a first aspect, a sodium metal battery cell is provided, including: an electrolyte solution, where the electrolyte solution includes a first additive, and the first additive includes an organic compound containing an unsaturated group; and a catalyst, where the catalyst includes at least one of a transition metal pure element or an alloy thereof.

The sodium metal battery cell according to this embodiment of this application includes an electrolyte solution and a catalyst. The electrolyte solution includes a first additive. The first additive includes an organic compound containing an unsaturated group. The catalyst includes at least one of a transition-metal pure element or an alloy thereof. In this way, in a case that hydrogen exists in the sodium metal battery cell, the catalyst can catalyze a redox reaction between the organic compound containing an unsaturated group in the first additive and the hydrogen, thereby consuming at least a part of the hydrogen and reducing the content of hydrogen in the sodium metal battery cell. Therefore, this technical solution is conducive to improving the reliability of the sodium metal battery cell, thereby improving the performance of the sodium metal battery cell.

In a possible implementation, the catalyst includes at least one of platinum, ruthenium, palladium, rhodium, iridium, nickel, cobalt, copper, or an alloy thereof.

In the above technical solution, on the one hand, hydrogen can react with the organic compound containing an unsaturated group on the surface of the metal or alloy. The reaction product easily detaches from the pure metal element or an alloy of the metal element, thereby promoting the consumption of hydrogen. On the other hand, the pure metal element or the alloy acts as a catalyst, and can catalyze the reaction between hydrogen and the organic compound containing an unsaturated group without a need to apply additional pressure to the sodium metal battery cell, thereby making it convenient to apply the catalyst in the sodium metal battery cell.

In a possible embodiment, the sodium metal battery cell further includes: a positive electrode plate, where the positive electrode plate includes the catalyst.

In the above technical solution, the positive electrode plate includes a catalyst, so that both the hydrogen in the sodium metal battery cell and the first additive in the electrolyte solution can contact the catalyst to react on the surface of the catalyst, and it is also convenient to dispose the catalyst in the sodium metal battery cell.

In a possible implementation, the positive electrode plate includes a positive current collector and a positive electrode film layer on a surface of the positive current collector. The positive electrode film layer includes the catalyst.

In the above technical solution, the positive electrode film layer is in contact with the electrolyte solution, and the positive electrode film layer includes the catalyst, thereby making it convenient for the catalyst to contact the first additive in the electrolyte solution and the hydrogen in the sodium metal battery.

In a possible implementation, the positive electrode film layer includes a positive active material. The positive active material includes a positive active material core and a coating layer that coats the positive active material core. The coating layer includes the catalyst.

In the above technical solution, the positive electrode film layer is in contact with the electrolyte solution, and the coating layer of the positive active material in the positive electrode film layer includes the catalyst, thereby making it convenient for the catalyst to contact the first additive in the electrolyte solution and the hydrogen in the sodium metal battery.

In a possible implementation, the coating layer includes: a coating layer body, where the coating layer body coats the positive active material core; and the catalyst on a surface of the coating layer body.

In the above technical solution, the catalyst is located on the surface of the coating layer body, thereby making it convenient for the catalyst to contact the first additive in the electrolyte solution and the hydrogen in the sodium metal battery.

In a possible implementation, the coating layer body includes at least one of aluminum oxide, silicon oxide, or carbon.

In the above technical scheme, the aluminum oxide, silicon oxide, carbon, and other constituents in the coating layer body can serve as carriers to carry the catalyst, so as to add the catalyst into the coating layer. In addition, the coating layer body further improves the performance of the positive active material, for example, improves the surface stability of the positive active material, promotes the transmission of sodium ions in the positive active material, reduces the residual alkaline compounds on the surface of the positive active material, and the like.

In a possible implementation, the sodium metal battery cell further includes a separator. The separator is configured to separate a positive electrode plate from a negative electrode plate in the sodium metal battery. The separator includes a base film layer and a first coating on a surface of the base film layer. The first coating includes the catalyst.

In the above technical solution, the separator is in contact with the electrolyte solution, and the first coating of the separator includes the catalyst, thereby making it convenient for the catalyst to contact the first additive in the electrolyte solution and the hydrogen in the sodium metal battery.

In a possible implementation, the first coating includes a functional material. The functional material includes a functional material body and the catalyst on a surface of the functional material body.

In the above technical solution, the catalyst is located on the surface of the functional material body, thereby making it convenient for the catalyst to contact the first additive in the electrolyte solution and the hydrogen in the sodium metal battery.

In a possible implementation, the functional material body includes aluminum oxide.

In the above technical solution, the aluminum oxide can serve as a carrier to carry the catalyst, so as to add the catalyst into the first coating.

In a possible implementation, the sodium metal battery cell further includes a housing. The housing is configured to accommodate the electrolyte solution. A second coating is disposed on an inner wall of the housing, and the second coating includes the catalyst.

In the above technical solution, the inner wall of the housing is in contact with the electrolyte solution, and a second coating is disposed on the inner wall of the housing. The second coating includes the catalyst, thereby making it convenient for the catalyst to contact the first additive in the electrolyte solution and the hydrogen in the sodium metal battery.

In a possible implementation, the sodium metal battery cell further includes a negative electrode plate, and the negative electrode plate is a negative current collector.

In the above technical solution, the negative electrode plate of the sodium metal battery cell is a negative current collector, so that no negative active material needs to be disposed on the surface of the negative current collector during the preparation of the battery cell, thereby reducing the mass and volume of the sodium metal battery cell, and increasing the energy density of the sodium metal battery cell.

In a possible implementation, a mass percent of the first additive in relation to the electrolyte solution is 0.1% to 5%, and optionally 1% to 5%.

In the above technical solution, the mass percent of the first additive in relation to the electrolyte solution is 0.1% to 5%, thereby reducing the hydrogen content in the sodium metal battery cell, and also reducing the risk that an excessively high content of the first additive gives rise to side reactions and adversely affects the energy density of the sodium metal battery cell, in turn, improving the performance of the sodium metal battery cell. When the mass percent of the first additive in relation to the electrolyte solution is 1% to 5%, the performance of the sodium metal battery cell is further improved.

In a possible implementation, the first additive includes at least one of phenylacetylene, styrene, phenol, 1,3,5-triphenylacetylene, naphthalene, benzene, N-ethylcarbazole, toluene, monobenzyltoluene, dibenzyltoluene, or cinnamaldehyde, and optionally, the first additive includes at least one of phenol, phenylacetylene, or naphthalene.

In the above technical solution, the type of the first additive can be flexibly selected based on actual conditions. When the first additive includes at least one of phenol, phenylacetylene, or naphthalene, the first additive is more effective in consuming hydrogen, thereby further reducing the hydrogen content in the sodium metal battery cell.

In a possible implementation, a content of the catalyst in the sodium metal battery cell is 0.01 µg/mAh to 1000 µg/mAh, and optionally 1 µg/mAh to 500 µg/mAh.

In the above technical solution, the content of the catalyst in the sodium metal battery cell is 0.01 µg/mAh to 1000 µg/mAh, thereby not only catalyzing the reaction between hydrogen and the first additive, but also reducing the probability that the energy density of the battery cell is decreased due to an excessive catalyst content, and in turn, achieving a good trade-off between the reliability and the energy density of the sodium metal battery cell. The content of the catalyst in the sodium metal battery cell falling within the range of 1 µg/mAh to 500 µg/mAh contributes to a better trade-off between the reliability and the energy density of the sodium metal battery cell.

According to a second aspect, a method for preparing a sodium metal battery cell is provided, including: providing an electrode assembly and a housing, and fitting the electrode assembly into the housing, where a catalyst is disposed in the electrode assembly and/or on an inner wall of the housing, and the catalyst includes at least one of a transition-metal pure element or an alloy thereof, and injecting an electrolyte solution into the housing, where the electrolyte solution includes a first additive, and the first additive includes an organic compound containing an unsaturated group.

In an embodiment of this application, the hydrogen in the sodium metal battery cell prepared by the above technical solution can react with the first additive under the action of the catalyst, thereby reducing the hydrogen content in the sodium metal battery cell, and improving the performance of the sodium metal battery cell.

In a possible implementation, the first additive includes at least one of platinum, ruthenium, palladium, rhodium, iridium, nickel, cobalt, copper, or an alloy thereof.

In a possible implementation, a mass percent of the first additive in relation to the electrolyte solution is 0.1% to 5%, and optionally 1% to 5%.

In a possible implementation, the first additive includes at least one of phenylacetylene, styrene, phenol, 1,3,5-triphenylacetylene, naphthalene, benzene, N-ethylcarbazole, toluene, monobenzyltoluene, dibenzyltoluene, or cinnamaldehyde, and optionally, the first additive includes at least one of phenol, phenylacetylene, or naphthalene.

In a possible implementation, a content of the catalyst is 0.01 µg/mAh to 1000 µg/mAh, and optionally 1 µg/mAh to 500 µg/mAh.

According to a third aspect, a battery is provided, including the sodium metal battery cell according to the first aspect or any one of embodiments thereof, or, a sodium metal battery cell prepared by the method according to the second aspect or any one of embodiments thereof.

According to a fourth aspect, this application provides an electrical device, including the battery according to the third aspect.

The sodium metal battery cell according to this embodiment of this application includes an electrolyte solution and a catalyst. The electrolyte solution includes a first additive. The first additive includes an organic compound containing an unsaturated group. The catalyst includes at least one of a transition-metal pure element or an alloy thereof. In this way, in a case that hydrogen exists in the sodium metal battery cell, the catalyst can catalyze a redox reaction between the organic compound containing an unsaturated group in the first additive and the hydrogen, thereby consuming at least a part of the hydrogen and reducing the content of hydrogen in the sodium metal battery cell. Therefore, this technical solution is conducive to improving the reliability of the sodium metal battery cell, thereby improving the performance of the sodium metal battery cell.

### BRIEF DESCRIPTION OF DRAWINGS

FIG. 1 is a schematic diagram of a sodium metal battery cell according to an embodiment of this application;
FIG. 2 is a schematic diagram of a method for preparing a sodium metal battery cell according to an embodiment of this application;
FIG. 3 is a schematic diagram of a battery according to an embodiment of this application; and
FIG. 4 is a schematic diagram of an electrical device according to an embodiment of this application.

### DETAILED DESCRIPTION

The following discloses and describes in detail some embodiments of a sodium metal battery cell and a preparation method thereof, a battery, and an electrical device of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on. Unless otherwise expressly specified herein, any embodiments and optional embodiments hereof may be combined with each other to form a new technical solution. Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

With lithium-ion battery technology being applied in a progressively wider range of fields such as electronic devices, electric vehicles, and energy storage, problems such as shortage of lithium resources and the rise in the price of lithium have become prominent. The physical and chemical properties of sodium are similar to those of lithium, and sodium is abundant in reserves of raw materials and low in price. Therefore, the use of sodium-ion batteries has gradually gained attention. However, the energy density and cycle performance of a sodium-ion battery are relatively low, thereby bottlenecking the promotion and application of sodium-ion batteries. In contrast to a sodium-ion battery, a sodium-metal negative electrode of a sodium metal battery possesses a relatively high theoretical specific capacity and a low operating potential, so that the sodium metal battery possesses a relatively high energy density.

However, during the use or storage of sodium metal batteries, a large amount of hydrogen is generated in the sodium metal battery, thereby being detrimental to the reliability of the sodium metal battery and unfavorable to improving the performance of the sodium metal battery.

In view of this, this application provides a sodium metal battery cell. The sodium metal battery cell includes an electrolyte solution and a catalyst. The electrolyte solution includes a first additive. The first additive includes an organic compound containing an unsaturated group. The catalyst includes at least one of a transition-metal pure element or an alloy thereof. Under the catalytic action of the catalyst, the organic compound containing an unsaturated group undergoes a redox reaction with the hydrogen in the sodium metal battery cell, thereby consuming at least a part of the hydrogen, reducing the content of hydrogen in the sodium metal battery cell, improving the reliability of the sodium metal battery cell, and in turn, improving the performance of the sodium metal battery cell.

### [Sodium metal battery cell]

The sodium metal battery cell according to this embodiment of this application includes an electrolyte solution and a catalyst.

The electrolyte solution includes a first additive. The first additive includes an organic compound containing an unsaturated group.

The unsaturated group may be one of groups such as a carbon-carbon double bond, a carbon-carbon triple bond, a carbon-oxygen triple bond, a carbon-nitrogen triple bond, and a benzene ring. The organic compound containing the unsaturated group is prone to addition reactions, for example, redox reactions with hydrogen. In an example in which the unsaturated group is a carbon-carbon double bond, in a process of addition reaction between the carbon-carbon double bond and hydrogen, the carbon-carbon double bond opens and the hydrogen is consumed to finally form a carbon-carbon single bond (this addition reaction is also referred to as a hydrogenation reaction).

The catalyst includes at least one of a transition-metal pure element or an alloy thereof.

The catalyst may include a transition-metal pure element, where the transition-metal pure element may include a pure element formed by an element in Group D of the periodic table, such as palladium and platinum.

The catalyst may include an alloy of the transition-metal pure element, for example, a palladium-molybdenum alloy or a platinum-palladium alloy.

The catalyst added in the sodium metal battery cell can catalyze the reaction between the unsaturated group and hydrogen. Specifically, hydrogen is dissociated and adsorbed on the surface of the catalyst, and the organic compound containing an unsaturated group is adsorbed onto the surface of the catalyst. In this way, the dissociated hydrogen reacts with the unsaturated group on the surface of the catalyst to consume the hydrogen in the sodium metal battery cell. In contrast to the direct reaction between the hydrogen and the unsaturated group, the added catalyst reduces the energy barrier of the reaction between the hydrogen and the unsaturated group, and facilitates the reaction between hydrogen and the unsaturated group.

After the hydrogenation reaction occurs between the hydrogen and the organic compound containing an unsaturated group, a hydrogenation product is generated on the surface of the catalyst. For example, a carbon-carbon triple bond is transformed into a carbon-carbon double bond or a carbon-carbon single bond, a carbonyl group is transformed into a hydroxyl group, benzene is transformed into cyclohexane, and so on.

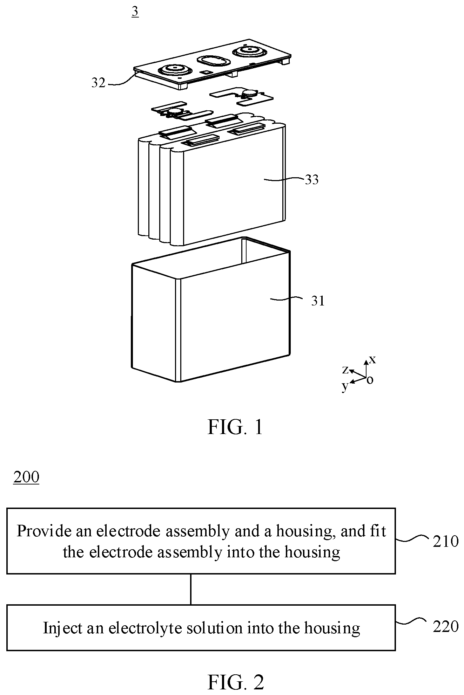

The shape of the sodium metal battery cell is not particularly limited herein, and may be cylindrical, prismatic or in any other shape. FIG. 1 is a schematic diagram of a sodium metal battery cell according to an embodiment of this application. For example, as shown in FIG. 1, the sodium metal battery cell 3 is prismatic, and includes a housing 31, a cover plate 32, and an electrode assembly 33 disposed in the housing 31. The housing 31 and the cover plate 32 may be configured to package the electrode assembly 33 and an electrolyte solution.

The housing 31 and the cover plate 32 may be hard shells such as a hard plastic shell, an aluminum shell, or a steel shell. Alternatively, the housing 31 and the cover plate 32 may be a soft package such as a pouch-type soft package. The soft package may be made of plastic such as polypropylene, polybutylene terephthalate, or polybutylene succinate.

The electrode assembly 33 includes a positive electrode plate, a negative electrode plate, and a separator. The electrode assembly 33 may be prepared by winding or stacking the positive electrode plate, the negative electrode plate, and the separator.

The electrolyte solution may further include an electrolyte salt and an organic solvent. The electrolyte salt may be sodium hexafluorophosphate (NaPF₆). The organic solvent may be a carbonate ester solvent or an ether-based solvent. Carbonate ester solvents include ethylene carbonate (EC), propylene carbonate (PC), fluoroethylene carbonate (FEC) that take on a cyclic shape, and dimethyl carbonate (DMC), diethyl carbonate (DEC), and ethyl methyl carbonate (EMC) that take on a chain shape, and the like. Ether solvents include monoglyme, diglyme, triglyme, tetraglyme, tetrahydrofuran, 1,3-dioxolane, and the like.

The sodium metal battery cell according to this embodiment of this application includes an electrolyte solution and a catalyst. The electrolyte solution includes a first additive. The first additive includes an organic compound containing an unsaturated group. The catalyst includes at least one of a transition-metal pure element or an alloy thereof. In this way, in a case that hydrogen exists in the sodium metal battery cell, the catalyst can catalyze a redox reaction between the organic compound containing an unsaturated group in the first additive and the hydrogen, thereby consuming at least a part of the hydrogen and reducing the content of hydrogen in the sodium metal battery cell. Therefore, this technical solution is conducive to improving the reliability of the sodium metal battery cell, thereby improving the performance of the sodium metal battery cell.

In some embodiments, the catalyst includes at least one of platinum, ruthenium, palladium, rhodium, iridium, nickel, cobalt, copper, or an alloy thereof.

The catalyst may be a pure metal element or an alloy containing the metal element. For example, the catalyst is a nickel-cobalt alloy, a palladium-molybdenum alloy, a platinum-palladium alloy, a platinum-iridium alloy, a platinum-rhodium alloy, a platinum-nickel alloy, a platinum-cobalt alloy, or an iridium-nickel alloy.

The pure metal element and an alloy thereof are of relatively high capability in dissociating and adsorbing hydrogen. Hydrogen is prone to be adsorbed onto the surface of the pure metal element and an alloy thereof, and dissociate on the surface. The pure metal element and an alloy thereof are of moderate adsorptivity to the organic compound containing an unsaturated group. In this way, the organic compound containing an unsaturated group can react with hydrogen on the surface of the pure metal element and an alloy thereof. In addition, the reaction product can detach from the surface of the pure metal element and an alloy thereof, thereby making it convenient for the hydrogen to further react with the organic compound containing an unsaturated group on the surface of the pure metal element and an alloy thereof. Therefore, the pure metal element or an alloy thereof used as a catalyst facilitates the reaction between hydrogen and the organic compound containing an unsaturated group, thereby facilitating the consumption of hydrogen.

In the sodium metal battery cell, the pure metal element or the alloy used as a catalyst can catalyze the reaction between hydrogen and the organic compound containing an unsaturated group without a need to apply additional pressure to the sodium metal battery cell, thereby making it convenient to apply the catalyst in the sodium metal battery cell.

In the above embodiment, the pure metal element or an alloy thereof used as a catalyst facilitates the consumption of hydrogen and makes it convenient to apply the catalyst in the sodium metal battery cell.

In some embodiments, the sodium metal battery cell further includes a positive electrode plate. The positive electrode plate includes the catalyst.

In the sodium metal battery cell, the positive electrode plate includes the catalyst. The electrolyte solution includes a first additive. The first additive includes an organic compound containing an unsaturated group. Because the positive electrode plate is in contact with the electrolyte solution, the organic compound containing an unsaturated group can react with hydrogen on the surface of the positive electrode plate to consume the hydrogen in the sodium metal battery cell.

That the positive electrode plate includes the catalyst means that the catalyst may be added during the preparation of the positive electrode plate, so that the catalyst becomes a part of the positive electrode plate, thereby making it convenient to dispose the catalyst in the sodium metal battery cell.

In the above embodiment, the positive electrode plate includes the catalyst, so that both the hydrogen in the sodium metal battery cell and the first additive in the electrolyte solution can contact the catalyst to react on the surface of the catalyst, and it is also convenient to dispose the catalyst in the sodium metal battery cell.

In some embodiments, the positive electrode plate includes a positive current collector and a positive electrode film layer on a surface of the positive current collector. The positive electrode film layer includes the catalyst.

The positive current collector includes two surfaces opposite to each other in a thickness direction of the positive current collector. The positive electrode film layer is disposed on either or both of the two opposite surfaces of the positive current collector.

Optionally, the positive current collector may be metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene, polyethylene terephthalate, polybutylene terephthalate, polystyrene, or polyethylene.

The positive electrode film layer may further include a positive active material, a conductive agent, and a binder. For example, the positive active material is a sodium-containing transition metal oxide, the conductive agent is carbon black, and the binder is polyvinylidene fluoride.

In this embodiment, the positive active material, the conductive agent, the binder, and the catalyst may be mixed to form a slurry, and then the slurry is applied onto a surface of the positive current collector to form a positive electrode film layer.

In the above embodiment, the positive electrode film layer is in contact with the electrolyte solution, and the positive electrode film layer includes the catalyst, thereby making it convenient for the catalyst to contact the first additive in the electrolyte solution and the hydrogen in the sodium metal battery.

In some embodiments, the positive electrode film layer includes a positive active material. The positive active material includes a positive active material core and a coating layer that coats the positive active material core. The coating layer includes the catalyst.

The positive active material core may include at least one of a layered transition metal oxide, a polyanionic compound, or a Prussian blue compound.

In the above embodiments, the positive electrode film layer is in contact with the electrolyte solution, and the coating layer of the positive active material in the positive electrode film layer includes the catalyst, thereby making it convenient for the catalyst to contact the first additive in the electrolyte solution and the hydrogen in the sodium metal battery.

In some embodiments, the coating layer includes: a coating layer body, where the coating layer body coats the positive active material core; and the catalyst on a surface of the coating layer body.

In the above embodiments, the catalyst is located on the surface of the coating layer body, thereby making it convenient for the catalyst to contact the first additive in the electrolyte solution and the hydrogen in the sodium metal battery.

In some embodiments, the coating layer body includes at least one of aluminum oxide, silicon oxide, or carbon.

In the above embodiments, the aluminum oxide, silicon oxide, carbon, and other constituents in the coating layer body can serve as carriers to carry the catalyst, so as to add the catalyst into the coating layer. In addition, the coating layer body further improves the performance of the positive active material, for example, improves the surface stability of the positive active material, promotes the transmission of sodium ions in the positive active material, reduces the residual alkaline compounds on the surface of the positive active material, and the like.

In some embodiments, the sodium metal battery cell further includes a separator. The separator is configured to separate a positive electrode plate from a negative electrode plate in the sodium metal battery. The separator includes a base film layer and a first coating on a surface of the base film layer. The first coating includes the catalyst.

In these embodiments, the separator may be a composite film. The base film layer includes two surfaces opposite to each other in a thickness direction of the film. The first coating may be disposed on either or both of the two opposite surfaces of the base film layer.

The base film layer of the separator may be made of at least one of glass fiber, non-woven fabric, polyethylene, polypropylene, or polyvinylidene difluoride.

In the above embodiments, the separator is in contact with the electrolyte solution, and the first coating of the separator includes the catalyst, thereby making it convenient for the catalyst to contact the first additive in the electrolyte solution and the hydrogen in the sodium metal battery.

In some embodiments, the first coating includes a functional material. The functional material includes a functional material body and the catalyst on a surface of the functional material body.

In the above embodiments, the catalyst is located on the surface of the functional material body, thereby making it convenient for the catalyst to contact the first additive in the electrolyte solution and the hydrogen in the sodium metal battery.

In some embodiments, the functional material body includes aluminum oxide.

In the above embodiments, the aluminum oxide can serve as a carrier to carry the catalyst, so as to add the catalyst into the first coating. In addition, aluminum oxide is also beneficial to improving the high-temperature resistance of the separator.

In some embodiments, the sodium metal battery cell further includes a housing. The housing is configured to accommodate the electrolyte solution. A second coating is disposed on an inner wall of the housing, and the second coating includes the catalyst.

For example, as shown in FIG. 1, a second coating is disposed on the inner wall of the housing 31. The catalyst in the second coating may contact the electrolyte solution in the housing 31.

Optionally, the second coating further includes materials such as aluminum oxide. The catalyst may be attached to the aluminum oxide. In other words, the aluminum oxide may serve as a carrier for carrying the catalyst, so that the catalyst is disposed in the second coating.

In the above embodiments, the inner wall of the housing is in contact with the electrolyte solution, and a second coating is disposed on the inner wall of the housing. The second coating includes the catalyst, thereby making it convenient for the catalyst to contact the first additive in the electrolyte solution and the hydrogen in the sodium metal battery.

In some embodiments, the sodium metal battery cell further includes a negative electrode plate, and the negative electrode plate is a negative current collector.

That the negative electrode plate is a negative current collector may mean that no active material layer is disposed on the negative current collector. In some embodiments, for normal use of the negative electrode plate, a conductive film layer may be deposited on the negative current collector.

That the negative electrode plate is a negative current collector means that the negative current collector serves as a negative electrode plate. This type of sodium metal battery cell is also known as an "anode-free battery". During charging, sodium ions deintercalated from the positive electrode plate are deposited onto the negative current collector to form a sodium metal negative electrode.

In the above embodiments, the negative electrode plate of the sodium metal battery cell is a negative current collector, so that no negative active material needs to be disposed on the surface of the negative current collector during the preparation of the battery cell, thereby reducing the mass and volume of the sodium metal battery cell, and increasing the energy density of the sodium metal battery cell.

In some embodiments, a mass percent of the first additive in relation to the electrolyte solution is 0.1% to 5%, and optionally 1% to 5%. For example, the mass percent of the first additive in relation to the electrolyte solution is 0.1%, 1%, or 5%.

When the mass percent of the first additive in relation to the electrolyte solution is less than 0.1%, the content of the first additive is relatively low, and the number of unsaturated groups in the electrolyte solution is relatively small, thereby consuming a relatively small amount of hydrogen in the sodium metal battery cell.

When the mass percent of the first additive in relation to the electrolyte solution is greater than 5%, the content of the first additive is relatively high, thereby being detrimental to the energy density of the sodium metal battery cell and increasing the risk of side reactions of the first additive.

In the above embodiments, the mass percent of the first additive in relation to the electrolyte solution is 0.1% to 5%, thereby reducing the hydrogen content in the sodium metal battery cell, and also reducing the risk that an excessively high content of the first additive gives rise to side reactions and adversely affects the energy density of the sodium metal battery cell, in turn, improving the performance of the sodium metal battery cell.

When the mass percent of the first additive in relation to the electrolyte solution is 1% to 5%, a better trade-off is achieved between the consumption of hydrogen and the energy density of the sodium metal battery cell, thereby further improving the performance of the sodium metal battery cell.

In some embodiments, the first additive includes at least one of phenylacetylene (C₈H₆), styrene (C₈H₈), phenol (C₆H₆O), 1,3,5-triphenylacetylene (C₁₂H₆), naphthalene (NAP), benzene (BZ), N-ethylcarbazole (NEC), toluene (TOL), monobenzyltoluene (MBT), dibenzyltoluene (DBT), or cinnamaldehyde (C₉H₈O), and optionally, the first additive includes at least one of phenol, phenylacetylene, or naphthalene.

In the above embodiments, the type of the first additive can be flexibly selected based on actual conditions. When the first additive includes at least one of phenol, phenylacetylene, or naphthalene, the first additive is more effective in consuming hydrogen, thereby further reducing the hydrogen content in the sodium metal battery cell.

In some embodiments, a content of the catalyst in the sodium metal battery cell is 0.01 µg/mAh to 1000 µg/mAh, and optionally 1 µg/mAh to 500 µg/mAh.

When the content of the catalyst in the sodium metal battery cell is less than 0.01 µg/mAh, the content of the catalyst is relatively low, and is relatively weak in catalyzing the reaction between hydrogen and the organic compound containing an unsaturated group, so that the amount of consumed hydrogen in the sodium metal battery cell is relatively small.

When the content of the catalyst in the sodium metal battery cell is greater than 1000 µg/mAh, the content of the catalyst is relatively high, thereby being detrimental to the energy density of the sodium metal battery cell.

In the above embodiments, the content of the catalyst in the sodium metal battery cell is 0.01 µg/mAh to 1000 µg/mAh, thereby not only catalyzing the reaction between hydrogen and the first additive, but also reducing the probability that the energy density of the battery cell is decreased due to an excessive catalyst content, and in turn, achieving a good trade-off between the reliability and the energy density of the sodium metal battery cell.

The content of the catalyst in the sodium metal battery cell falling within the range of 1 µg/mAh to 500 µg/mAh contributes to a better trade-off between the reliability and the energy density of the sodium metal battery cell.

In some embodiments, the temperature at which the first additive reacts with the hydrogen in the sodium metal battery cell is 20 °C to 60 °C, for example, 20 °C or 60 °C.

Optionally, the temperature at which the first additive reacts with the hydrogen in the sodium metal battery cell is an operating temperature of the sodium metal battery cell. For example, when the sodium metal battery cell is applied to a vehicle, the reaction temperature is the temperature of the sodium metal battery cell during movement and charging of the vehicle, for example, 20 °C to 30 °C.

Optionally, the temperature in the sodium metal battery cell may be set based on actual conditions. For example, the temperature is 30 °C or 50 °C.

In the above embodiments, when the temperature is 20 °C to 60 °C, the temperature is beneficial to the reaction between the first additive and hydrogen, and can also reduce the adverse effect of excessive temperature on the sodium metal battery cell.

The technical solution of the sodium metal battery cell of this application has been described above with reference to FIG. 1. The following describes a method for preparing a sodium metal battery cell with reference to FIG. 2, where the corresponding details of the sodium metal battery cell can be learned by referring to above description, and are omitted here.

### [Method for preparing a sodium metal battery cell]

FIG. 2 is a schematic diagram of a method for preparing a sodium metal battery cell according to an embodiment of this application. As shown in FIG. 2, the method 200 includes step 210 and step 220.

Step 210: Provide an electrode assembly and a housing, and fit the electrode assembly into the housing. A catalyst is disposed in the electrode assembly and/or on an inner wall of the housing. The catalyst includes at least one of a transition-metal pure element or an alloy thereof.

That the catalyst is disposed in the electrode assembly may be: the positive electrode plate includes the catalyst; or, the separator includes the catalyst.

That a catalyst is disposed in the electrode assembly and/or on an inner wall of the housing may come in the following exemplary scenarios: the catalyst is disposed in the electrode assembly alone; the catalyst is disposed on the inner wall of the housing alone; and, the catalyst is disposed both in the electrode assembly and on the inner wall of the housing.

Step 220: Inject an electrolyte solution into the housing. The electrolyte solution includes a first additive. The first additive includes an organic compound containing an unsaturated group.

In an embodiment of this application, the hydrogen in the sodium metal battery cell prepared by the above technical solution can react with the first additive under the action of the catalyst, thereby reducing the hydrogen content in the sodium metal battery cell, and improving the performance of the sodium metal battery cell.

In some embodiments, the first additive includes at least one of platinum, ruthenium, palladium, rhodium, iridium, nickel, cobalt, copper, or an alloy thereof.

In some embodiments, a mass percent of the first additive in relation to the electrolyte solution is 0.1% to 5%, and optionally 1% to 5%.

In some embodiments, the first additive includes at least one of phenylacetylene, styrene, phenol, 1,3,5-triphenylacetylene, naphthalene, benzene, N-ethylcarbazole, toluene, monobenzyltoluene, dibenzyltoluene, or cinnamaldehyde, and optionally, the first additive includes at least one of phenol, phenylacetylene, or naphthalene.

In some embodiments, the content of the catalyst is 0.01 µg/mAh to 1000 µg/mAh, and optionally 1 µg/mAh to 500 µg/mAh.

In some embodiments, the temperature at which the hydrogen in the sodium metal battery cell reacts with the first additive is 20 °C to 60 °C.

### [Battery]

An embodiment of this application provides a battery. The battery includes the sodium metal battery cell disclosed in any one of the above embodiments or a sodium metal battery cell prepared by the method disclosed in any one of the above embodiments.

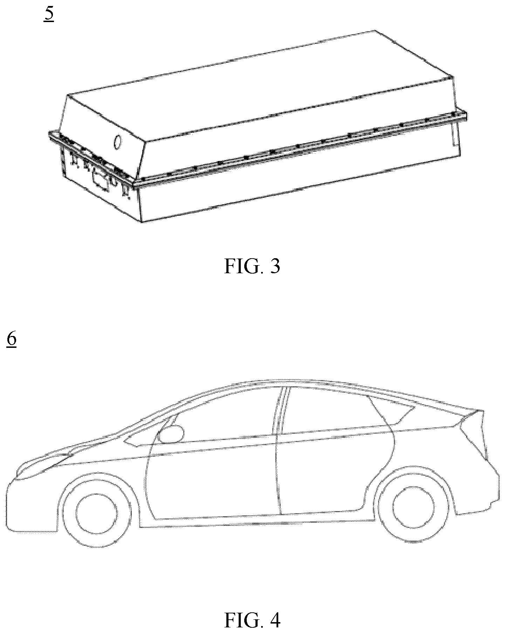

FIG. 3 is a schematic diagram of a battery according to an embodiment of this application. As shown in FIG. 3, this application provides a battery 5. The battery includes the sodium metal battery cell 3 disclosed in any one of the above embodiments. The sodium metal battery cell 3 may directly form the battery 5. Alternatively, a plurality of sodium metal battery cells form a battery module first, and then a plurality of battery modules form the battery 5.

### [Electrical device]

An embodiment of this application provides an electrical device. The electrical device includes the battery disclosed in the above embodiment.

FIG. 4 is a schematic diagram of an electrical device according to an embodiment of this application. As shown in FIG. 4, this application provides an electrical device 6. The electrical device includes the battery 5 disclosed in the above embodiment.

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiments

### Embodiment 1

In the sodium metal battery cell of Embodiment 1, the first additive is phenylacetylene, the catalyst is metal platinum, and the catalyst is disposed in the coating layer of the positive active material. The mass percent A of the first additive in relation to the electrolyte solution is 1%, and the content B of the catalyst in the sodium metal battery cell is 10 µg/mAh. In the sodium metal battery cell, the electrolyte salt in the electrolyte solution is NaPF₆, and the solvent is monoglyme.

### Embodiments 2 to 7

Embodiments 2 to 7 differ from Embodiment 1 in the mass percent A of the first additive in relation to the electrolyte solution. In Embodiments 2 to 7, A is 0.5%, 0.1%, 3%, 5%, 0.05%, and 10%, respectively.

### Embodiments 8 to 17

Embodiments 8 to 17 differ from Embodiment 1 in the content B of the catalyst in the sodium metal battery cell. In Embodiments 8 to 17, B is 1 µg/mAh, 0.01 µg/mAh, 50 µg/mAh, 100 µg/mAh, 300 µg/mAh, 500 µg/mAh, 800 µg/mAh, 1000 µg/mAh, 0.001 µg/mAh, and 2000 µg/mAh, respectively.

### Embodiments 18 to 21

Embodiments 18 to 21 differ from Embodiment 1 in the type of the first additive. In Embodiments 18 to 21, the first additive is phenol, naphthalene, toluene, and cinnamaldehyde, respectively.

### Embodiments 22 to 26

Embodiments 22 to 26 differ from Embodiment 1 in the type of the catalyst. In Embodiments 22 to 26, the catalyst is metal palladium, metal ruthenium, platinum-cobalt alloy, platinum-palladium alloy, and iridium-nickel alloy, respectively.

### Embodiments 27 to 29

Embodiments 27 to 29 differ from Embodiment 1 in the specific position of the catalyst.

In Embodiment 27, the catalyst is disposed in the positive electrode film layer. Specifically, the catalyst is loaded onto aluminum oxide by impregnation and sintering. The aluminum oxide powder loaded with the catalyst is mixed with a binder PVDF, a positive active material, and a conductive agent to form a slurry, and then the slurry is applied onto the positive current collector and dried to form a positive electrode film layer.

In Embodiment 28, the catalyst is disposed in the second coating on the inner wall of the housing. Specifically, the catalyst is loaded onto aluminum oxide by impregnation and sintering. The aluminum oxide powder loaded with the catalyst is made into a slurry, and then the slurry is applied onto the inner wall of the housing and dried to form the second coating.

In Embodiment 29, the catalyst is disposed in the first coating on the surface of the base film layer of the separator. Specifically, the catalyst is loaded onto aluminum oxide by impregnation and sintering. The aluminum oxide powder loaded with the catalyst is mixed with a binder to form a slurry, and then the slurry is applied onto the base film layer and dried to form the first coating. The base film layer is made of polyethylene.

### Embodiment 30

Embodiment 30 differs from Embodiment 1 in that sodium metal is pre-deposited on the negative electrode in Embodiment 30, that is, the sodium metal batteries in Embodiments 1 to 29 are "anode-free".

### Comparative Embodiment 1

In contrast to Embodiment 1, in Comparative Embodiment 1, no first additive is included in the electrolyte solution of the sodium metal battery cell, and no catalyst is disposed in the sodium metal battery cell.

### [Preparing a sodium metal battery cell]

### (1) Preparing a positive electrode plate

Preparing the positive electrode plate in Embodiments 1 to 26: Mixing metal oxides CuO, Fe₂O₃, and Mn₂O₃ with a sodium salt sodium carbonate evenly at an appropriate ratio, and then putting the mixture into a saggar in a box furnace; sintering the mixture according to a specified sintering system; cooling the sintered product to room temperature after completion of the sintering, and pulverizing the cooled product to obtain a positive active material core.

Weighing out 20 nm Al₂O₃, ammonium dihydrogen phosphate, and a catalyst (the catalysts in different embodiments are set out in Table 1) at a specified ratio, stirring the mixture well by using a ball mill, and then mixing the mixture with the positive active material core well at a specified ratio by using an agitator. Placing the mixed material into a muffle furnace, and keeping sintering at 350 °C for 8 hours, during which dry air is passed into the furnace. Naturally cooling the heated material to room temperature to obtain a positive active material doped with a catalyst.

Mixing well the catalyst-doped positive active material, Super P as a conductive agent, and polyvinylidene difluoride (PVDF) as a binder, and N-methylpyrrolidone (NMP) at a mass ratio of 80: 15: 5 to obtain a positive electrode slurry. Coating positive current collector aluminum foil with the positive electrode slurry evenly. Air-drying the aluminum foil at room temperature, and then transferring the foil into a 120 °C oven in which the foil is dried for 1 hour, and then performing cold-pressing and slitting to obtain a positive electrode plate.

Preparing the positive electrode plate in Embodiment 27: Mixing well metal platinum as a catalyst, the positive active material (that is, the positive active material core obtained in Embodiments 1 to 26), Super P as a conductive agent, and PVDF as a binder to obtain a positive electrode slurry. Applying the positive slurry well onto positive current collector aluminum foil. Air-drying the aluminum foil at room temperature, and then transferring the aluminum foil into a 120 °C oven in which the foil is dried for 1 hour, and then performing cold-pressing and slitting to obtain a positive electrode plate.

Preparing the positive electrode plate in Embodiments 28 to 30: Mixing well the positive active material (that is, the positive active material core obtained in Embodiments 1 to 26), Super P as a conductive agent, and PVDF as a binder to obtain a positive electrode slurry. Applying the positive electrode slurry evenly onto positive current collector aluminum foil. Air-drying the aluminum foil at room temperature, and then transferring the aluminum foil into a 120 °C oven in which the foil is dried for 1 hour, and then performing cold-pressing and slitting to obtain a positive electrode plate.

### (2) Preparing a negative electrode plate

Preparing the negative electrode plate in Embodiments 1 to 29: Adding carbon nanotubes and sodium alginate into deionized water, and stirring the mixture to form a homogeneous slurry. Applying the slurry onto negative current collector aluminum foil. Oven-drying the slurry, and cutting the foil to obtain an "anode-free" negative electrode plate, in which the areal density of the undercoat is 20 g/m².

Preparing the negative electrode plate in Embodiment 30: Assembling a battery cell by using the negative electrode plate obtained in Embodiments 1 to 29, a positive electrode plate, and a separator. Charging the assembled battery cell at a constant current of 0.5C until the voltage reaches 3.8 V, so as to pre-deposit sodium metal on the negative electrode. Disassembling the fully charged battery in a glovebox to take out a negative electrode plate as the negative electrode plate of this embodiment.

### (3) Preparing a separator

Preparing the separator in Embodiments 1 to 28 and Embodiment 30: Using a polyethylene (PE) porous polymer film as a separator, 9 µm thick.

Preparing the separator in Embodiment 29: Mixing well chloroplatinic acid and aluminum oxide at a specified ratio, calcining the mixture for 3 hours in a 350 °C tube furnace in which 5% H₂/N₂ gas is introduced. Cooling the calcined product to room temperature to obtain aluminum oxide loaded with a catalyst. Preparing a slurry from the catalyst-loaded aluminum oxide and a binder polyvinylidene fluoride, applying the slurry onto a base film layer (made of polyethylene), and drying the slurry to form a first coating.

Stacking the positive electrode plate, separator, and negative electrode plate sequentially in such a way that the separator is located between the positive electrode plate and the negative electrode plate to serve a function of separation, and winding the stacked structure to obtain an electrode assembly. Placing the electrode assembly into a housing, injecting the prepared electrolyte solution into the housing, and sealing the housing to obtain a sodium metal battery cell.

### [Determining the type and content of the catalyst]

The type and content of the catalyst are determined by inductively coupled plasma-atomic emission spectrometry (ICP-AES).

### [Determining the type and content of the first additive]

The type and content of the first additive are determined by a gas chromatograph or a gas chromatography mass spectrometry instrument.

### [Testing the normal-temperature cycle performance]

Charging a battery at a constant current of 0.5C in a 25 °C and normal-pressure (0.1 MPa) environment until the voltage reaches 3.8 V, and then discharging the battery at a constant current of 1C until the voltage drops to 2.0 V, thereby completing one charge-discharge cycle. Repeating the above charging and discharging process for 500 cycles, and recording the cycle capacity retention rate by assuming that the first-cycle discharge capacity is 100%. Using the normal-temperature capacity retention rate as a metric of the normal-temperature cycle performance of the battery.

### [Testing high-temperature cycle performance]

Charging a battery at a constant current of 0.5C in a 60 °C and normal-pressure (0.1 MPa) environment until the voltage reaches 3.8 V, and then discharging the battery at a constant current of 1C until the voltage drops to 2.0 V, thereby completing one charge-discharge cycle. Repeating the above charging and discharging process for 500 cycles, and recording the cycle capacity retention rate by assuming that the first-cycle discharge capacity is 100%. Using the normal-temperature capacity retention rate as an indicator of the normal-temperature cycle performance of the battery.

### [Testing the normal-temperature thickness expansion rate]

Charging a battery at a constant current of 0.5C at a room temperature (25 °C) until the voltage reaches 3.8 V. Measuring the initial volume of the fully-charged battery by a drainage method. Storing the battery at room temperature for 24 days, and measuring the post-storage volume of the battery by using a drainage method. Calculating the volume expansion rate of the battery against the battery volume measured before storage. Calculating the volume expansion rate of the battery that has been stored at room temperature for 24 days as: volume expansion rate (%) = (volume of the battery measured after storage/volume of the battery measured before storage) - 1.

### [Testing the high-temperature thickness expansion rate]

Charging a battery at a constant current of 0.5C at 60 °C until the voltage reaches 3.8 V. Measuring the initial volume of the fully-charged battery by a drainage method. Storing the battery in a 60 °C oven for 24 days, and then taking out the battery. Leaving the battery to stand for 60 minutes at a room temperature. Measuring the volume of the battery by a drainage method within a period of 60 minutes after the battery is cooled down to a room temperature. Calculating the volume expansion rate of the battery against the battery volume measured before storage. Calculating the volume expansion rate of the battery that has been stored at 60 °C for 24 days as: volume expansion rate (%) = (volume of the battery after storage/volume of the battery before storage) - 1.

**Table 1 Experimental parameters and test results of embodiments and comparative embodiments**

| | First additive | | Catalyst | | Normal-temperature cycle performance | High-temperature cycle performance | Normal-temperature expansion rate | High-temperature expansion rate |
|---|---|---|---|---|---|---|---|---|
| | Type | A (%) | Type | B (µg/mAh) | | | | |
| Embodiment 1 | Phenylacetylene | 1 | Metal platinum | 10 | 82.00% | 80.20% | 0.05% | 0.37% |
| Embodiment 2 | Phenylacetylene | 0.5 | Metal platinum | 10 | 82.90% | 79.30% | 0.05% | 1.08% |
| Embodiment 3 | Phenylacetylene | 0.1 | Metal platinum | 10 | 81.30% | 78.10% | 0.08% | 3.11% |
| Embodiment 4 | Phenylacetylene | 3 | Metal platinum | 10 | 81.00% | 79.90% | 0.03% | 0.38% |
| Embodiment 5 | Phenylacetylene | 5 | Metal platinum | 10 | 79.30% | 75.90% | 0.02% | 0.21% |
| Embodiment 6 | Phenylacetylene | 0.05 | Metal platinum | 10 | 81.00% | 76.00% | 0.11% | 3.44% |
| Embodiment 7 | Phenylacetylene | 10 | Metal platinum | 10 | 67.10% | 55.00% | 0.03% | 0.33% |
| Embodiment 8 | Phenylacetylene | 1 | Metal platinum | 1 | 81.90% | 77.60% | 0.06% | 1.17% |
| Embodiment 9 | Phenylacetylene | 1 | Metal platinum | 0.01 | 80.10% | 75.40% | 0.13% | 2.89% |
| Embodiment 10 | Phenylacetylene | 1 | Metal platinum | 50 | 81.00% | 80.50% | 0.05% | 0.43% |
| Embodiment 11 | Phenylacetylene | 1 | Metal platinum | 100 | 82.10% | 79.30% | 0.03% | 0.25% |
| Embodiment 12 | Phenylacetylene | 1 | Metal platinum | 300 | 81.80% | 79.90% | 0.04% | 0.19% |
| Embodiment 13 | Phenylacetylene | 1 | Metal platinum | 500 | 81.90% | 80.80% | 0.02% | 0.21% |
| Embodiment 14 | Phenylacetylene | 1 | Metal platinum | 800 | 80.90% | 79.20% | 0.05% | 0.25% |
| Embodiment 15 | Phenylacetylene | 1 | Metal platinum | 1000 | 81.00% | 79.90% | 0.03% | 0.20% |
| Embodiment 16 | Phenylacetylene | 1 | Metal platinum | 0.001 | 81.10% | 76.00% | 0.15% | 3.52% |
| Embodiment 17 | Phenylacetylene | 1 | Metal platinum | 2000 | 80.30% | 77.90% | 0.03% | 0.25% |
| Embodiment 18 | Phenol | 1 | Metal platinum | 10 | 80.90% | 78.10% | 0.08% | 1.41% |
| Embodiment 19 | Naphthalene | 1 | Metal platinum | 10 | 81.80% | 79.70% | 0.11% | 0.92% |
| Embodiment 20 | Toluene | 1 | Metal platinum | 10 | 82.20% | 78.10% | 0.13% | 1.52% |
| **Embodiment** 21 | Cinnamaldehyd e | 1 | Metal platinum | 10 | 82.30% | 78.90% | 0.03% | 0.57% |
| Embodiment 22 | Phenylacetylene | 1 | **Metal** palladium | 10 | 81.10% | 78.20% | 0.08% | 1.47% |
| Embodiment 23 | Phenylacetylene | 1 | Metal ruthenium | 10 | 81.90% | 76.00% | 0.09% | 1.66% |
| Embodiment 24 | Phenylacetylene | 1 | Platinum-cobalt alloy | 10 | 82.30% | 79.10% | 0.03% | 0.54% |
| Embodiment 25 | Phenylacetylene | 1 | Platinum-palladium alloy | 10 | 81.50% | 80.40% | 0.06% | 0.41% |
| Embodiment 26 | Phenylacetylene | 1 | Iridium-nickel alloy | 10 | 81.00% | 78.80% | 0.07% | 0.91% |
| Embodiment 27 | Phenylacetylene | 1 | Metal platinum | 10 | 81.30% | 79.50% | 0.05% | 0.75% |
| Embodiment 28 | Phenylacetylene | 1 | Metal platinum | 10 | 81.90% | 78.00% | 0.03% | 0.55% |
| Embodiment 29 | Phenylacetylene | 1 | Metal platinum | 10 | 80.90% | 79.10% | 0.08% | 0.48% |
| Embodiment 30 | Phenylacetylene | 1 | Metal platinum | 10 | 82.80% | 81.20% | 0.15% | 1.37% |
| Comparative Embodiment 1 | / | / | / | / | 81.20% | 75.80% | 0.13% | 3.31% |

The high-temperature expansion rate and normal-temperature expansion rate of the sodium metal battery cell are related to the hydrogen content in the sodium metal battery cell. The lower the hydrogen content in the sodium metal battery cell, the lower the expansion rate of the sodium metal battery cell.

As shown in Embodiments 1 to 7, by setting an appropriate mass percent of the first additive in relation to the electrolyte solution, this application can effectively control the volume expansion rate of the sodium metal battery cell. As shown in Embodiments 8 to 17, by setting an appropriate catalyst content, this application can effectively control the volume expansion rate of the sodium metal battery cell. As shown in Embodiments 18 to 21, a variety of first additives added can reduce the volume expansion rate of the sodium metal battery cell. As shown in Embodiments 22 to 26, a variety of catalysts can also reduce the volume expansion rate of the sodium metal battery cell. As shown in Embodiments 27 to 29, all the catalysts disposed at different positions can reduce the volume expansion rate of the sodium metal battery cell. As shown in Embodiment 30, the catalyst and the first additive can be applied to a sodium metal battery cell in which the negative electrode is metal sodium.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A sodium metal battery cell, comprising:
an electrolyte solution, wherein the electrolyte solution comprises a first additive, and the first additive comprises an organic compound containing an unsaturated group; and
a catalyst, wherein the catalyst comprises at least one of a transition-metal pure element or an alloy thereof.

2. The sodium metal battery cell according to claim 1, wherein the catalyst comprises at least one of platinum, ruthenium, palladium, rhodium, iridium, nickel, cobalt, copper, or an alloy thereof.

3. The sodium metal battery cell according to claim 1 or 2, wherein the sodium metal battery cell further comprises: a positive electrode plate, wherein the positive electrode plate comprises the catalyst.

4. The sodium metal battery cell according to claim 3, wherein the positive electrode plate comprises a positive current collector and a positive electrode film layer on a surface of the positive current collector, and the positive electrode film layer comprises the catalyst.

5. The sodium metal battery cell according to claim 4, wherein the positive electrode film layer comprises a positive active material, the positive active material comprises a positive active material core and a coating layer that coats the positive active material core, and the coating layer comprises the catalyst.

6. The sodium metal battery cell according to claim 5, wherein the coating layer comprises:
a coating layer body, wherein the coating layer body coats the positive active material core; and
the catalyst on a surface of the coating layer body.

7. The sodium metal battery cell according to claim 6, wherein the coating layer body comprises at least one of aluminum oxide, silicon oxide, or carbon.

8. The sodium metal battery cell according to any one of claims 1 to 7, wherein the sodium metal battery cell further comprises a separator, the separator is configured to separate a positive electrode plate from a negative electrode plate in the sodium metal battery, the separator comprises a base film layer and a first coating on a surface of the base film layer, and the first coating comprises the catalyst.

9. The sodium metal battery cell according to claim 8, wherein the first coating comprises a functional material, and the functional material comprises a functional material body and the catalyst on a surface of the functional material body.

10. The sodium metal battery cell according to claim 9, wherein the functional material body comprises aluminum oxide.

11. The sodium metal battery cell according to any one of claims 1 to 10, wherein the sodium metal battery cell further comprises a housing, the housing is configured to accommodate the electrolyte solution, a second coating is disposed on an inner wall of the housing, and the second coating comprises the catalyst.

12. The sodium metal battery cell according to any one of claims 1 to 11, wherein the sodium metal battery cell further comprises a negative electrode plate, and the negative electrode plate is a negative current collector.

13. The sodium metal battery cell according to any one of claims 1 to 12, wherein a mass percent of the first additive in relation to the electrolyte solution is 0.1% to 5%, and optionally 1% to 5%.

14. The sodium metal battery cell according to any one of claims 1 to 13, wherein the first additive comprises at least one of phenylacetylene, styrene, phenol, 1,3,5-triphenylacetylene, naphthalene, benzene, N-ethylcarbazole, toluene, monobenzyltoluene, dibenzyltoluene, or cinnamaldehyde, and optionally, the first additive comprises at least one of phenol, phenylacetylene, or naphthalene.

15. The sodium metal battery cell according to any one of claims 1 to 14, wherein a content of the catalyst in the sodium metal battery cell is 0.01 µg/mAh to 1000 µg/mAh, and optionally 1 µg/mAh to 500 µg/mAh.

16. A method for preparing a sodium metal battery cell, comprising:
providing an electrode assembly and a housing, and fitting the electrode assembly into the housing, wherein a catalyst is disposed in the electrode assembly and/or on an inner wall of the housing, and the catalyst comprises at least one of a transition-metal pure element or an alloy thereof, and
injecting an electrolyte solution into the housing, wherein the electrolyte solution comprises a first additive, and the first additive comprises an organic compound containing an unsaturated group.

17. The method according to claim 16, wherein the first additive comprises at least one of platinum, ruthenium, palladium, rhodium, iridium, nickel, cobalt, copper, or an alloy thereof.

18. The method according to claim 16 or 17, wherein a mass percent of the first additive in relation to the electrolyte solution is 0.1% to 5%, and optionally 1% to 5%.

19. The method according to any one of claims 16 to 18, wherein the first additive comprises at least one of phenylacetylene, styrene, phenol, 1,3,5-triphenylacetylene, naphthalene, benzene, N-ethylcarbazole, toluene, monobenzyltoluene, dibenzyltoluene, or cinnamaldehyde, and optionally, the first additive comprises at least one of phenol, phenylacetylene, or naphthalene.

20. The method according to any one of claims 16 to 19, wherein a content of the catalyst is 0.01 µg/mAh to 1000 µg/mAh, and optionally 1 µg/mAh to 500 µg/mAh.

21. A battery, comprising the sodium metal battery cell according to any one of claims 1 to 15 or a sodium metal battery cell prepared by the method according to any one of claims 16 to 20.

22. An electrical device, comprising the battery according to claim 21.
